# DEMANDE DE BREVET EUROPEEN

(11) **EP 1 528 681 A1**
(43) Date de publication de la demande: **04.05.2005**
(21) Numéro de dépôt: 04364067.1
(22) Date de dépôt: 29.10.2004
(51) Int. Cl.: H03K 19/0175, G06K 7/00

(54) **Circuit micro-éléctronique d'activation ou de désactivation d'au moins une entrée/sortie, lecteur de cartes à puces et procédé de désactivation correspondants**

(30) Priorité: 31.10.2003 FR 0312838
(71) Demandeur: ATMEL NANTES SA, 44306 Nantes Cédex 3 (FR)
(72) Inventeur: Messager, Philippe, 44300 Nantes (FR); Faivre, Sébastien, 44300 Nantes (FR)
(74) Mandataire: Bioret, Ludovic

(57) **Abrégé**

L'invention concerne un circuit micro-électronique d'activation ou de désactivation d'au-moins une seconde entrée/sortie (2, 3), ou second « buffer », reçoit une commande de désactivation (21, 31) correspondant à une combinaison d'une commande d'activation, respectivement de désactivation, générale (StopPadB) et d'une information représentative de l'état activé, respectivement désactivé, (12,22) d'au moins un premier buffer, de façon que le ou lesdits seconds buffers ne soient activés, respectivement désactivés, que lorsque le ou lesdits premiers buffers sont déjà activés, respectivement désactivés, pour respecter une séquence prédéterminée d'activation, respectivement de désactivation, desdits buffers (1, 2, 3).

## Description

Le domaine de l'invention est celui des circuits micro-électroniques. Plus précisément, l'invention concerne l'activation ou la désactivation d'entrées/sorties ou d'ensembles d'entrées/sorties (ci-après également désignés par l'anglicisme courant « buffers » d'entrée/sortie), en cas de problème, et notamment d'une coupure d'alimentation.

Un domaine d'application privilégié de l'invention est celui des lecteurs de cartes à puce, pour lesquels il est nécessaire de respecter une séquence de désactivation spécifique, lorsqu'il y a une coupure d'alimentation. Cependant, l'invention peut s'appliquer de façon plus générale dans tous les circuits devant respecter une séquence particulière d'activation et/ou de désactivation d'entrée/sortie, notamment lors d'une coupure d'alimentation.

Dans les systèmes connus, lorsqu'un circuit subit une coupure d'alimentation, un détecteur de chute d'alimentation (PFD ou « Power Fail Detect » en anglais) permet de passer en urgence sous un mode de réinitialisation (« reset » en anglais), qui permet d'éviter à un micro-processeur, ou à un composant similaire, et aux mémoires internes, d'effectuer de mauvaises opérations.

Par exemple, dans le cas d'un circuit classique présentant une alimentation VCC de 3V typique, et de 2,7V minimum, la tension de passage en mode de réinitialisation Vreset vaut 2,4V, pour protéger le circuit (fonctionnalité à x MHz), alors que VCCmin logique vaut environ 1,2V. Le circuit est alors fonctionnel, mais à basse fréquence.

Dans certaines applications, il est nécessaire de respecter une séquence de désactivation particulière lorsqu'il y a une coupure d'alimentation. C'est par exemple le cas des lecteurs de cartes à puces. Ces derniers présentent trois entrées/sorties de communication :
- CCLK (horloge de la carte à puce extérieure) ;
- CRST (réinitialisation pour cette carte à puce) ;
- CIO (permettant le transfert de données).

Lors d'une transaction entre le lecteur de cartes à puces et une carte à puces, il y a un échange d'informations. Pendant cette transaction, et en cas de chute d'alimentation, il est nécessaire d'arrêter la communication. Ainsi, une spécification ISO7816 stipule qu'il faut d'abord forcer CRST à 0, puis CCLK et enfin CIO.

Or, lorsque le détecteur de chute d'alimentation PFD fige le microprocesseur en réinitialisation (« reset »), aucune opération ne peut plus avoir lieu. Selon l'art antérieur, c'est donc cette commande de réinitialisation PFD qui fige les trois entrées/sorties de la carte à puce à 0 en même temps.

En effet, le microprocesseur ne peut plus espacer ces trois commutations de plusieurs coups d'horloge, puisque celle-ci est arrêtée, et n'est donc plus fonctionnelle, lorsque le microprocesseur est sous réinitialisation.

En conséquence, aucun circuit actuel n'est efficace, ni ne répond à la future norme ISO.

L'invention a notamment pour objectif de pallier ces inconvénients de l'art antérieur.

Plus précisément, un objectif de l'invention est de fournir une technique de désactivation d'une série de buffers, dans un ordre, ou selon une séquence, prédéterminé, en cas de problème et notamment de coupure d'alimentation.

Ainsi, un objectif de l'invention est de permettre de réaliser une telle séquence de désactivation, sans le contrôle d'un microprocesseur (qui se trouve sous réinitialisation), et sans la présence d'une horloge.

Un objectif particulier de l'invention est de fournir une telle technique, permettant notamment au lecteur de cartes à puces de répondre aux normes actuelles et futures.

Dans le cadre de cette application, un autre objectif de l'invention est de fournir une telle technique, permettant à une carte à puces de sauvegarder des données en cours.

Un autre objectif de l'invention est de fournir une telle technique, qui soit simple à mettre en oeuvre, et peu coûteuse. Notamment, un objectif de l'invention est de fournir une telle technique, occupant une place très réduite sur un circuit intégré.

Encore un autre objectif de l'invention est de fournir une telle technique, capable de fonctionner, même avec une tension disponible très basse, et par exemple de l'ordre de 1,2V.

Ces objectifs, ainsi que d'autres qui apparaîtront par la suite, sont atteints à l'aide d'un circuit micro-électronique d'activation ou de désactivation d'au moins deux buffers d'au moins un composant électronique. Selon l'invention, au moins un second buffer reçoit une commande de désactivation correspondant à une combinaison d'une commande d'activation, respectivement de désactivation, générale et d'une information représentative de l'état activé, respectivement désactivé, d'au moins un premier buffer, de façon que le ou lesdits seconds buffers ne soient activés, respectivement désactivés, que lorsque le ou lesdits premiers buffers sont déjà activés, respectivement désactivés, pour respecter une séquence prédéterminée d'activation, respectivement de désactivation, desdits buffers.

Ainsi, il est possible de contrôler efficacement et simplement une séquence imposée de désactivation ou de désactivation, même lorsque l'on se trouve dans une situation de réinitialisation complète de l'application.

Le terme usuel dans le domaine technique « buffer » signifie classiquement entrée/sortie, ou ensemble d'entrées/sorties.

De façon avantageuse, ledit circuit met en oeuvre uniquement des moyens logiques, non commandés par une horloge.

Il peut donc fonctionner même si l'horloge de l'application est interrompue.

Selon un mode de réalisation préférentiel de l'invention, ladite information représentative de l'état activé, respectivement désactivé, d'un buffer est obtenu sur un trigger d'entrée de ce dernier.

Dans une application avantageuse de l'invention, ladite commande d'activation, respectivement de désactivation, générale est générée notamment en cas de coupure d'alimentation dudit composant électronique.

Préférentiellement, ladite commande d'activation, respectivement de désactivation, générale est transmise avec un retard prédéterminé auxdits buffers.

Ledit retard prédéterminé est préférentiellement suffisant pour permettre à au moins un module dudit composant de mémoriser au moins une donnée en cours de traitement.

De façon avantageuse, ledit module délivre au moins une information de confirmation d'activation, respectivement de désactivation, qui doit être combiné à ladite commande d'activation, respectivement de désactivation, générale pour activer, respectivement désactiver, chacun desdits buffers.

Préférentiellement, ledit module délivre une information de confirmation d'activation, respectivement de désactivation, distincte pour chacun desdits buffers.

Dans un mode de réalisation particulier de l'invention, au moins une information de confirmation d'activation, respectivement de désactivation, est transmise à un desdits buffers via une bascule D, mémorisant et bloquant ladite information.

Ledit retard peut notamment être généré à l'aide d'une série d'inverseurs.

De façon avantageuse, chacun desdits buffers reçoit une commande de réinitialisation via une porte ET, recevant sur l'une de ses deux entrées ladite information de confirmation de désactivation et sur l'autre de ses deux entrées :
- ladite commande d'activation, respectivement de désactivation, générale pour au moins un premier buffer ;
- la sortie d'une porte OU alimentée par ladite commande d'activation, respectivement de désactivation, générale et au moins une information représentative de l'état activé, respectivement désactivé, d'au moins un premier buffer, pour au moins un second buffer.

Ledit circuit peut en particulier être mis en oeuvre dans un lecteur de cartes à puces.

Dans ce cas, il contrôle avantageusement la désactivation de la séquence de buffer suivante :
- désactivation du buffer de réinitialisation d'une carte à puce (CRST) ;
- désactivation du buffer de l'horloge d'une carte à puce (CCLK) ;
- désactivation du buffer d'entrées/sorties d'une carte à puce (CIO).

Avantageusement, ledit circuit comprend au moins une ligne à retard pour contrôler le délai entre deux activations, respectivement désactivations.

L'invention concerne également les lecteurs de cartes à puce comprenant un circuit micro-électronique tel que décrit ci-dessus, ainsi que le procédé d'activation ou de désactivation correspondant.

Selon ce procédé, au moins un second buffer reçoit une commande d'activation, respectivement de désactivation, correspondant à une combinaison d'une commande d'activation, respectivement de désactivation, générale et d'une information représentative de l'état activé, respectivement désactivé, d'au moins un premier buffer, de façon que le ou lesdits seconds buffers ne soient activés, respectivement désactivés, que lorsque le ou lesdits premiers buffers sont déjà activés, respectivement désactivés, pour respecter une séquence prédéterminée d'activation, respectivement de désactivation, desdits buffers.

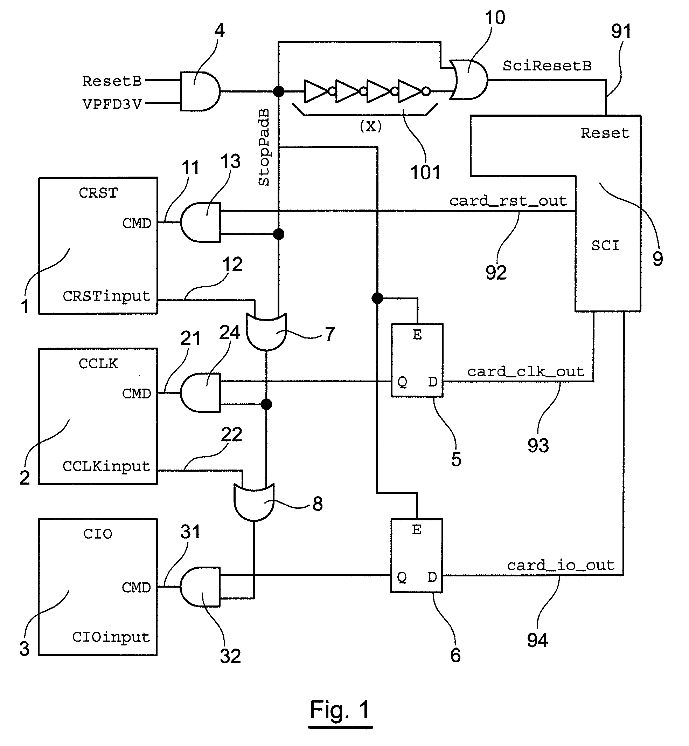

D'autres caractéristiques et avantages de l'invention apparaîtront plus clairement à la lecture de la description suivante d'un mode de réalisation préférentiel, donné à titre d'exemple illustratif et non limitatif, et de la figure unique annexée, représentant un circuit électronique mettant en oeuvre l'invention, dans le cas d'un lecteur de cartes à puces.

Le mode de réalisation décrit ci-après concerne donc les lecteurs de cartes à puces. Plus précisément, ce mode de réalisation concerne un lecteur de cartes à puces conforme aux exigences de la spécification ISO7816. Bien entendu, le principe de l'invention peut aisément et simplement être adapté à d'autres applications, et le nombre de buffers modifié. On pourra également, si nécessaire, adapter le séquencement, pour que deux ou plusieurs buffers soient simultanément désactivés, si nécessaire.

Bien entendu, la même approche peut être mise en oeuvre pour une séquence d'activation de buffers.

Le principe de l'invention repose en partie sur l'observation qu'un buffer est bidirectionnel, et qu'on peut en conséquence en connaître le niveau extérieur 0 ou 1 de l'entrée/sortie, via le « trigger » d'entrée.

On peut ainsi utiliser cette information, pour cascader les différentes désactivations.

En se référant à la figure unique, on souhaite donc désactiver successivement les entrées/sorties CRST 1, CCLK 2, puis CIO 3.

La réinitialisation de chacune de ces entrées/sorties se fait en envoyant une commande de « reset » sur l'entrée de commande (CMD) correspondante 11, 21 ou 31.

Lorsqu'une entrée/sortie est passée en mode de réinitialisation, l'information correspondante en sortie peut donc être récupérée sur le trigger (ou détecteur de niveau) d'entrée associé CRSTinput 12 ou CCLKinput 22.

Si nécessaire, on peut ajouter des lignes à retard sur ces fils 12 et 22, pour régler le temps entre deux désactivations (le délai étant choisi de façon à ne pas dépasser le temps de chûte de l'alimentation.

Lorsque le détecteur de chute d'alimentation PFD détecte une chute d'alimentation, il génère un signal correspondant VPSD3V valant 0, qui est reçu par une porte ET 4. L'autre entrée de cette porte ET est un signal ResetB (reset externe), émis par l'application. Cette dernière information permet de ne mettre en oeuvre le circuit de l'invention que lorsque le microprocesseur est sous reset.

La porte ET 4 délivre un signal StopPadB.

Cette information StopPadB permet de bloquer l'information issue du microprocesseur et transmise vers les buffers 2 et 3 afin que ceux-ci ne permutent plus, grâce à des bascules 5 et 6.

Simultanément, cette information va forcer la descente du buffer CRST 1 à 0. Les entrées/sorties étant chargées par les capacités parasites des liaisons sur le circuit intégré, cette communication se fait en 20 nanosecondes environ.

Lorsque le buffer CRST est à 0, l'information du trigger d'entrée correspondante CRSTinput 12 va commuter, et on disposera ainsi en interne d'une information indiquant que CRST a commuté, et est effectivement à 0. Ce signal 12 permet ensuite de commander la descente de CCLK à son tour, via une porte OU 7 recevant à l'entrée les informations CRSTinput et StopPadB.

De la même façon, le signal CCLKinput 22 commute alors, lorsque le buffer CCLK vaut 0. Cette commande CCLK input permet alors, par l'intermédiaire d'une porte OU 8, de commander la mise à zéro du buffer CIO 3.

Ce principe de chaînage, qui peut bien sûr être étendu, permet de façon efficace, de respecter l'ordre de désactivation de buffer, alors que le circuit est sous réinitialisation.

On notera qu'il est fonctionnel jusqu'à une tension très basse, de l'ordre de 1,2V, car il est purement logique (il n'y a pas contraintes de fréquence). Il n'a donc pas besoin d'horloge, et donc d'oscillateurs.

L'alimentation VCC du circuit représente une capacité de plusieurs nano Farad, ce qui permet largement d'avoir le temps de faire un tel chaînage, entre le niveau de détection 2,4V et le niveau 1,2V où plus rien ne fonctionnera.

Dans le mode de réalisation illustré, avec 10 nF de capacité interne d'alimentation, le chaînage peut s'effectuer entre 2,4V et 2,1V.

Selon un aspect particulier de l'invention, on a prévu des moyens permettant à la carte à puces de mémoriser les données nécessaires qu'elle était en train de traiter.

Pour cela, on agit sur l'interface de carte à puce (SCI : « Smart Card Interface ») 9. Le signal de réinitialisation StopPadB est transmis à ce module SCI 9, sur son entrée de réinitialisation 91, sous une forme retardée SciResetB.

Ce retard est par exemple assuré par une porte OU 10 dont l'une des entrées est directement le signal StopPadB, et l'autre entrée le signal StopPadB retardé à l'aide d'une série d'inverseurs 101, dont le nombre X est choisi de façon à permettre au circuit d'avoir le temps de mémoriser (« latcher ») les informations nécessaires avant la réinitialisation du module SCI 9.

Ce module SCI 9 génère trois sorties de commandes, respectivement pour chacun des buffers :
- card_rst_out 92 ;
- card_clk_out 93 ;
- card_io_out 94.

Les deux derniers sont transmis respectivement à l'entrée D des bascules 5 et 6, dont les sorties Q alimentent respectivement deux portes ET 24 et 32, dont l'autre entrée correspond en sortie des portes OU 7 et 8 respectivement, et qui délivre les commandes 21 et 31.

Le signal 92 est quant à lui directement transmis à une porte ET 13, qui délivre la commande 11, et dont l'autre entrée est le signal StopPadB.

Comme déjà mentionné, le principe de chaînage de l'invention peut aisément être adapté à d'autres applications.

## Revendications

1. Circuit micro-électronique d'activation ou de désactivation d'au moins deux entrées/sorties (1, 2, 3), appelées « buffers », d'au moins un composant électronique,
**caractérisé en ce qu'**au moins une seconde entrée/sortie (2, 3), ou second « buffer », reçoit une commande de désactivation (21, 31) correspondant à une combinaison d'une commande d'activation, respectivement de désactivation, générale (StopPadB) et d'une information représentative de l'état activé, respectivement désactivé, (12, 22) d'au moins un premier buffer, de façon que le ou lesdits seconds buffers ne soient activés, respectivement désactivés, que lorsque le ou lesdits premiers buffers sont déjà activés, respectivement désactivés, pour respecter une séquence prédéterminée d'activation, respectivement de désactivation, desdits buffers (1, 2, 3).

2. Circuit micro-électronique selon la revendication 1, **caractérisé en ce qu'**il met en oeuvre uniquement des moyens logiques (4, 7, 8, 10, 13, 24, 32), non commandés par une horloge.

3. Circuit micro-électronique selon l'une quelconque des revendications 1 et 2, **caractérisé en ce que** ladite information représentative de l'état activé, respectivement désactivé, (12, 22) d'un buffer est obtenu sur un trigger d'entrée de ce dernier.

4. Circuit micro-électronique selon l'une quelconque des revendications 1 à 3, **caractérisé en ce que** ladite commande d'activation, respectivement de désactivation, générale (StopPadB) est générée notamment en cas de coupure d'alimentation dudit composant électronique.

5. Circuit micro-électronique selon l'une quelconque des revendications 1 à 4, **caractérisé en ce que** ladite commande d'activation, respectivement de désactivation, générale (StopPadB) est transmise avec un retard prédéterminé (X) auxdits buffers.

6. Circuit micro-électronique selon la revendication 5, **caractérisé en ce que** ledit retard prédéterminé (X) est suffisant pour permettre à au moins un module (9) dudit composant de mémoriser au moins une donnée en cours de traitement.

7. Circuit micro-électronique selon la revendication 6, **caractérisé en ce que** ledit module (9) délivre au moins une information de confirmation d'activation, respectivement de désactivation, qui doit être combiné à ladite commande d'activation, respectivement de désactivation, générale pour activer, respectivement désactiver, chacun desdits buffers (1, 2, 3).

8. Circuit micro-électronique selon la revendication 7, **caractérisé en ce que** ledit module (9) délivre une information de confirmation d'activation, respectivement de désactivation, distincte (92, 93, 94) pour chacun desdits buffers.

9. Circuit micro-électronique selon la revendication 8, **caractérisé en ce qu'**au moins une information de confirmation d'activation, respectivement de désactivation, est transmise à un desdits buffers via une bascule D (5, 6), mémorisant et bloquant ladite information.

10. Circuit micro-électronique selon l'une quelconque des revendications 5 à 9, **caractérisé en ce que** ledit retard (X) est généré à l'aide d'une série d'inverseurs (101).

11. Circuit micro-électronique selon l'une quelconque des revendications 7 à 10, **caractérisé en ce que** chacun desdits buffers reçoit une commande de réinitialisation via une porte ET (13, 24, 32), recevant sur l'une de ses deux entrées ladite information de confirmation de désactivation et sur l'autre de ses deux entrées :
- ladite commande d'activation, respectivement de désactivation, générale pour au moins un premier butter ;
- la sortie d'une porte OU (7, 8) alimentée par ladite commande d'activation, respectivement de désactivation, générale et au moins une information représentative de l'état activé, respectivement désactivé, d'au moins un premier buffer, pour au moins un second buffer.

12. Circuit micro-électronique selon l'une quelconque des revendications 1 à 11, **caractérisé en ce qu'**il comprend au moins une ligne à retard pour contrôler le délai entre deux activations, respectivement désactivations.

13. Circuit micro-électronique selon l'une quelconque des revendications 1 à 12, **caractérisé en ce qu'**il est mis en oeuvre dans un lecteur de cartes à puces.

14. Circuit micro-électronique selon la revendication 13, **caractérisé en ce qu'**il contrôle la désactivation de la séquence de buffer suivante :
- désactivation du buffer de réinitialisation d'une carte à puce (CRST) ;
- désactivation du buffer de l'horloge d'une carte à puce (CCLK) ;
- désactivation du buffer d'entrées/sorties d'une carte à puce (CIO).

15. Lecteur de cartes à puce, **caractérisé en ce qu'**il comprend un circuit micro-électronique selon l'une quelconque des revendications 1 à 14.

16. Procédé d'activation ou de désactivation d'au moins deux entrées/sorties (1, 2, 3), appelées « buffers », d'au moins un composant électronique,
**caractérisé en ce qu'**au moins une seconde entrée/sortie (2, 3), ou second « buffer », reçoit une commande d'activation, respectivement de désactivation, (21, 31) correspondant à une combinaison d'une commande d'activation, respectivement de désactivation, générale (StopPadB) et d'une information représentative de l'état activé, respectivement désactivé, (12, 22) d'au moins un premier buffer, de façon que le ou lesdits seconds buffers ne soient activés, respectivement désactivés, que lorsque le ou lesdits premiers buffers sont déjà activés, respectivement désactivés, pour respecter une séquence prédéterminée d'activation, respectivement de désactivation, desdits buffers (1, 2, 3).
